Europäisches Patentamt

European Patent Office

Office européen des brevets

(11) Veröffentlichungsnummer: **0 258 660 B1**

## EUROPÄISCHE PATENTSCHRIFT

(45) Veröffentlichungstag der Patentschrift: **19.06.91**

(51) Int. Cl.5: **B23B 51/02**

(21) Anmeldenummer: **87111231.4**

(22) Anmeldetag: **04.08.87**

(54) **Einlippen-Vollbohrer.**

(30) Priorität: **27.08.86 DE 3629033**

(43) Veröffentlichungstag der Anmeldung:
**09.03.88 Patentblatt 88/10**

(45) Bekanntmachung des Hinweises auf die
Patenterteilung:
**19.06.91 Patentblatt 91/25**

(84) Benannte Vertragsstaaten:
**AT BE CH DE ES FR GB IT LI LU NL SE**

(56) Entgegenhaltungen:
| | |
|---|---|
| EP-A- 0 127 009 | CH-A- 481 706 |
| DD-A- 202 642 | DE-A- 2 945 635 |
| DE-A- 3 200 674 | DE-A- 3 204 210 |
| DE-A- 3 509 753 | DE-A- 3 527 933 |
| DE-B- 2 064 024 | DE-B- 2 522 565 |
| DE-B- 2 730 418 | |

(73) Patentinhaber: **STELLRAM S.A.**
**Route de l'Etraz**
**CH-1260 Nyon, Vaud(CH)**

(72) Erfinder: **Grunsky, Manfred**
**54, Philipp-Holzmann str.**
**W-6072 Dreieich(DE)**

(74) Vertreter: **Köhler, Günter, Dipl.-Ing.**
**Nordring 1**
**W-6458 Rodenbach(DE)**

**Beschreibung**

Die Erfindung bezieht sich auf einen Einlippen-Vollbohrer mit einem einen Kühlmittelzuführkanal aufweisenden Schaft und einem eine Schneidplatte tragenden Bohrkopf am einen Schaftende, wobei die Schneidplatte mittels Klemmschrauben am Bohrkopf befestigt ist, und mit wenigstens zwei Führungsleisten.

Bei einem bekannten Einlippen-Vollbohrer ist der Bohrkopf für Werkstückbohrungen mit einem Durchmesserbereich von 2,5 bis 32 mm vollständig aus Hartmetall hergestellt, wobei die Schneiden und gegebenenfalls Führungsleisten unmittelbar am Bohrkopf angeschliffen werden. Ferner wird der Bohrkopf an einem Rohrschaft angelötet, um den Schaft, da es sich bei dem Bohrer um einen Tiefenbohrer handelt, der für sehr tiefe Werkstückbohrungen geeignet ist, wie sie beispielsweise zur Herstellung von Gewehrläufen erforderlich sind, verhältnismäßig lang ausbilden zu können. Denn ein Rohr bildet gleichzeitig den erforderlichen Kühlmittelzuführkanal, der bei einem massiven Schaft erst gebohrt werden müßte, was bei einem verhältnismäßig langen Schaft wiederum auf Schwierigkeiten stößt, weil eine Kühlmittelzuführbohrung wegen der üblicherweise vorhandenen Spanabfuhrnut einen verhältnismäßig kleinen Durchmesser aufweisen müßte, zu dessen Herstellung es eines entsprechend langen Bohrers mit geringem Durchmesser bedarf. Wenn nun bei einem solchen Einlippen-Vollbohrer die Schneiden stumpf geworden sind, müssen diese erneut geschliffen oder der gesamte Bohrer durch einen neuen Bohrer ersetzt werden. Das Nachschleifen ist arbeitsaufwendig und erfordert geschulte Fachkräfte. Darüber hinaus ist das Nachschleifen nicht beliebig oft durchführbar.

Man hat daher auch schon bei einem solchen EinlippenVollbohrer Schneidplatten aus Hartmetall in den Bohrkopf eingelötet. Hierbei braucht zwar nicht der gesamte Bohrkopf aus Hartmetall zu bestehen. Im übrigen bestehen aber die gleichen Schwierigkeiten wie bei einem Einlippen-Vollbohrer mit Vollhartmetallbohrkopf.

Bei dem aus der DE-B2-25 22 565 (Fig. 1 und 2) bekannten Einlippen-Vollbohrer der gattungsgemäßen Art werden der Bohrkopf und demzufolge auch der Schaft getrennt hergestellt und miteinander verbunden. Dies ist aufwendig.

Die DE-A1-32 00 674 zeigt einen Einlippen-Vollbohrer zum Tiefbohren mit Kühlmittelzuführkanälen in einem rohrförmigen Schaft und am Schaft angelötetem Bohrkopf. Am Bohrkopf ist entweder eine Schneide unmittelbar angeschliffen oder eine Schneidplatte angelötet. Hier gelten mithin ebenfalls die zuvor geschilderten Schwierigkeiten.

Aus der DE-A1-32 04 210 ist ein Spitzbohrer mit auswechselbarer Schneidplatte bekannt, die mittels seitlich über den Umfang des Schaftes vorstehender achsparalleler Kanten im Bohrloch geführt wird, nachdem das Werkstück beim Bohren durchbrochen worden ist.

Der Erfindung liegt die Aufgabe zugrunde, einen Einlippen-Vollbohrer der gattungsgemäßen Art anzugeben, der zum Tiefbohren kleiner Bohrungen, von vorzugsweise weniger als 20 mm Durchmesser, geeignet und auf einfache Weise herstellbar ist.

Erfindungsgemäß ist diese Aufgabe durch die im kennzeichnenden Teils des Anspruchs 1 angegebenen Merkmale gelöst.

Dadurch ist die einteilige Ausbildung von Bohrkopf und Schaft ohne Schwierigkeiten möglich, so daß ein nachträgliches Verbinden von Bohrkopf und Schaft entfällt. Die Schneidplatte kann weiterhin leicht ausgewechselt werden.

Auf diese Weise entfällt auch die getrennte Ausbildung und Anbringung der Führungsleiste.

Die Erfindung und ihre Weiterbildungen werden nachstehend anhand der Zeichnung bevorzugter Ausführungsbeispiele näher beschrieben. Es zeigen:

Fig. 1 zum besseren Verständnis der Erfindung eine Seitenansicht eines Teils eines Einlippen-Vollbohrers, der nicht unter den beanspruchten Schutzbereich fällt.

Fig. 2 die Vorderansicht des Einlippen-Vollbohrers nach Fig. 1,

Fig. 3 eine Seitenansicht eines Ausführungsbeispiels eines erfindungsgemäßen Einlippen-Vollbohrers und

Fig. 4 die Vorderansicht des Einlippen-Vollbohrers nach Fig. 3.

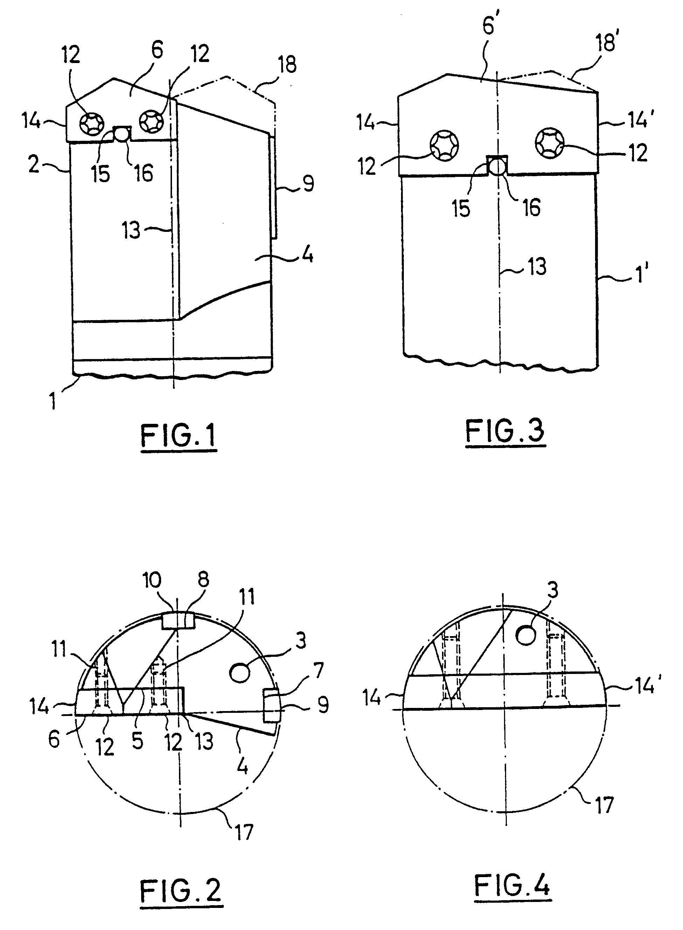

Der Einlippen-Vollbohrer nach den Fig. 1 und 2 hat einen nur teilweise dargestellten Schaft 1 und einen Bohrkopf 2. Schaft 1 und Bohrkopf 2 sind einteilig aus Hartmetall hergestellt. Hierfür wird zunächst ein kurzer zylindrischer Rohling aus massivem Hartmetall mit großer exzentrischer Axialbohrung axial solange gestreckt, bis sich der gewünschte Außendurchmesser ergibt, wobei sich der Durchmesser der Axialbohrung ebenfalls verringert. Diese Axialbohrung bildet dann eine Kühlmittelzuführbohrung 3. Sodann wird die sich ergebende Bohrstange durch spanabhebende Verformung mit einer im Querschnitt etwa V-förmigen Spanabfuhrnut 4, einer Nut 5 zur Aufnahme einer Schneidplatte 6 sowie Nuten 7 und 8 zur Aufnahme von Führungsleisten 9 und 10 versehen.

Im Boden der Nut 5 werden zwei Gewindebohrungen 11 zur Aufnahme von die Schneidplatte 6 durchsetzenden Klemmschrauben 12 ausgebildet.

Die Schneidplatte 6 liegt überwiegend auf der einen Seite der Bohrerdrehachse 13 und steht mit einem eine weitere Führungsleiste 14 bildenden seitlichen Teil über den Bohrerumfang vor, wobei sich die beiden Führungsleisten 9 und 14 in der Ebene der Schneidplatte 6 weitgehend diametral gegenüberliegen. Die Führungsleiste 10 liegt dagegen in einer zur Ebene der Schneidplatte 6 etwa senkrechten Axialebene. Beide Führungsleisten 9 und 10 sind in ihrer Nut 7 bzw. 9 eingelötet.

Die der Schneide abgekehrte Rückseite der Schneidplatte 6 ist mit einer Nut 15 versehen, in die ein Zentrierzapfen 16 eingreift.

Dadurch, daß sich die Schneidplatte 6 geringfügig über die Drehachse 13 hinaus in Richtung auf die Führungsleiste 9 erstreckt, wird bei der Drehung des Einlippen-Vollbohrers um die Drehachse 13 dennoch ein Loch in das Werkstück gebohrt, dessen Durchmesser dem des größten Umkreises 17 des Bohrwerkzeugs entspricht, wobei der Bohrungsgrund, falls es sich um eine Sacklochbohrung handelt, eine umlaufende Nut mit einem etwa V-förmigen Profil erhält, wie es durch die strickpunktierte Linie 18 in Fig. 1 dargestellt ist.

Bei diesem Einlippen-Vollbohrer kann die Schneidplatte 6 leicht entfernt und entweder nachgeschliffen oder durch eine neue Schneidplatte ersetzt werden, wobei der übrige Teil des Einlippen-Vollbohrers stets weiter benutzt werden kann.

Der Einlippen-Vollbohrer nach den Fig. 3 und 4 unterscheidet sich von dem nach den Fig. 1 und 2 im wesentlichen nur dadurch, daß sich die Schneidplatte 6' wenigstens über den gesamten Bohrerdurchmesser erstreckt und auf beiden Seiten mit einem je eine Führungsleiste 14 bzw. 14' bildenden Teil über den Bohrerumfang vorsteht. Der Schaft 1' hat einen etwa halbkreisförmigen Querschnitt, und die Nut 18' ist etwas flacher.

Bei dieser Ausbildung entfallen die Nuten 7 und 8 sowie die Führungsleisten 9 und 10.

## Ansprüche

1. Einlippen-Vollbohrer mit einem einen Kühlmittelzuführkanal aufweisenden Schaft und einem eine Schneidplatte tragenden Bohrkopf am einen Schaftende, wobei die Schneidplatte mittels Klemmschrauben am Bohrkopf befestigt ist, und mit wenigstens zwei Führungsleisten, **dadurch gekennzeichnet,** daß sich die Schneidplatte (6') wenigstens über den gesamten Bohrerdurchmesser erstreckt und auf beiden Seiten mit einem je eine der Führungsleisten (14; 14') bildenden Teil über den Bohrerumfang vorsteht.

2. Einlippen-Vollbohrer nach Anspruch 1, **dadurch gekennzeichnet,** daß Bohrkopf (2) und Schaft 1; 1') einteilig ausgebildet sind und der Kühlmittelzuführkanal (3) als Bohrung in dem ansonsten massiven Schaft (1; 1') durch axiales Strecken eines kurzen Rohlings mit größerer Axialbohrung als der Kühlmittelzuführbohrung und größerem Außendurchmesser als der gewünschte Schaftdurchmesser bis auf den gewünschten Schaftdurchmesser ausgebildet ist.

## Claims

1. Single-lip solid drill with a shank displaying a coolant feed channel, with a drill head carrying a cutting plate at one shank end, wherein the cutting plate is fastened at the drill head by means of clamping screws, and with at least two guide strips, characterised thereby, that the cutting plate (6') extends over at least the whole drill diameter and projects beyond the drill periphery at both sides by a part forming a respective one of the guide strips (14; 14').

2. Single-lip solid drill according to claim 1, characterised thereby, that the drill head (2) and the shank (1; 1') are constructed in one piece and the coolant feed channel (3) is formed as bore in the otherwise solid shank (1; 1') by axial stretching of a short blank, which has a larger axial bore than the coolant feed bore and is of a greater external diameter than the desired shank diameter, down to the desired shank diameter.

## Revendications

1. Fleuret plein à une lèvre de coupe avec un fût présentant un canal d'adduction pour fluide de refroidissement et une tête de forage portant une plaquette de coupe à une extrémité du fût, tandis que la plaquette de coupe est fixée à la tête de forage par des vis de serrage et avec au moins deux barrettes de guidage, caractérisé en ce que la plaquette de coupe 6' s'étend au moins sur tout le diamètre du fleuret et fait saillie des deux côtés au-delà de la périphérie du fleuret par une partie formant les barrettes de guidage (14, 14').

2. Fleuret plein à une lèvre de coupe selon la revendication 1, caractérisé en ce que la tête de forage (2) et le fût (1, 1') sont réalisés d'une pièce et que le canal d'adduction de fluide de refroidissement (3) est formé par un alésage dans le fût (1, 1'), massif pour le reste, par étirage axial d'une ébauche courte avec un alésage axial plus grand que l'alésage d'adduction de fluide de refroidissement et un diamètre extérieur plus grand que le diamètre du fût souhaité, jusqu'à ce qu'on obtienne le diamètre de fût souhaité.

FIG.1

FIG.3

FIG.2

FIG.4

5